# EUROPÄISCHE PATENTSCHRIFT

(11) **EP 0 680 592 B1**
(45) Veröffentlichungstag und Bekanntmachung des Hinweises auf die Patenterteilung: **20.08.1997**
(21) Anmeldenummer: 94905072.8
(22) Anmeldetag: 18.01.1994
(51) Int. Cl.: F27B 1/16, C21B 11/02

(54) **VERFAHREN UND EINRICHTUNG ZUM SCHMELZEN VON EISENMETALLISCHEN WERKSTOFFEN IN EINEM KOKSBEHEIZTEN KUPOLOFEN**
PROCESS AND DEVICE FOR MELTING IRON METALLURGY MATERIALS IN A COKE-FIRED CUPOLA
PROCEDE ET DISPOSITIF PERMETTANT DE FAIRE FONDRE DES MATIERES SIDERURGIQUES DANS UN CUBILOT CHAUFFE AU COKE

(30) Priorität: 20.01.1993 DE 4301322
(43) Veröffentlichungstag der Anmeldung: 08.11.1995
(73) Patentinhaber: FEUSTEL, Hans, Ulrich, D-7030 Leipzig (DE); MALLON, Joachim, D-7022 Leipzig (DE); SCHAAF, Michael, D-7101 Rückmarsdorf (DE)
(72) Erfinder: FEUSTEL, Hans Ulrich, D-7030 Leipzig (DE); MALLON, Joachim, D-7022 Leipzig (DE); SCHAAF, Michael, D-7101 Rückmarsdorf (DE); WILMS, Edmund, D-2405 Ahrensbök (DE); NEUMANN, Gerhard, D-9200 Freiberg (DE); KÖHLER, Karl-Heinz, D-6603 Elsterberg (DE); RUSCHITZKA, Ludwig, D-9205 Halsbrücke (DE)
(74) Vertreter: Manderla, Thomas, Dr.
(86) Internationale Anmeldenummer: EP9400108
(87) Internationale Veröffentlichungsnummer: WO9417352

(56) Entgegenhaltungen:
- GB-A- 914 904
- US-A- 2 788 964
- US-A- 4 324 583
- US-A- 4 769 065
- Giesserei 79(1992), nr.14, 17 Februar, Düsseldorf DE, Seiten 134-143

## Beschreibung

Die Erfindung betrifft einen koksbeheizten Kupolofen mit Kreislaufgasführung und ein Verfahren zum Schmelzen von eisenmetallischen Werkstoffen, insbesondere von niedriggekohlten, oxidationsanfälligen eisenmetallischen Einsatzstoffen, wie beispielsweise Stahlschrott, zur Herstellung von Gußeisen.

Bekannt ist es, die klassischen Kupolöfen aus verfahrenstechnischen und technologischen Gesichtspunkten generell nach einer Betriebsweise mit Luft (DD 299917 A7 und DE 3437911 C2), mit Sauerstoffanreicherung oder mit einer Sauerstoff-Direktinjektion (US-A-4324583) zu unterscheiden. Durch die in US-A-4324583 beispielsweise dargestellte Direktinjektion eines sekundären sauerstoffhaltigen Gases (50 % bis 100 % Sauerstoff) mit Ultraschallgeschwindigkeit, welches getrennt vom primären sauerstoffhaltigen Gebläsewind durch Düsen direkt injeziert wird, sollen eine verbesserte Koksverbrennung und Si-Zubrand sowie höhere C-Gehalte und geringere Wärmeverluste über den Kupolofenmantel erreicht werden. Gemäß Jungbluth-Diagramm ist bei koksgefeuerten Kupolöfen bzw. Schachtschmelzöfen aus wärmetechnischer Sicht nur die Zuführung einer optimalen Windmenge verfahrenstechnisch von Vorteil. Dies bedeutet, daß eine Anreicherung des Gebläsewindes mit Sauerstoff nur für solche Ofenbereiche sinnvoll ist, die keine optimalen wärmetechnischen Verhältnisse erreichen. Die Anreicherung des Gebläsewindes mit Sauerstoff führt bekanntermaßen zu einer Schmelzleistungssteigerung. Bei einer bis zu 100 %-igen Sauerstoffzuführung muß mit der 5-fachen Schmelzleistung gerechnet werden. Gleichzeitig wird das Verbrennungsverhältnis gesenkt, d.h., daß der CO-Anteil im Reaktionsgas im Ofen zunimmt, die wärmetechnischen Verhältnisse sich verschlechtern und bis zur Schmelzunterbrechung führen können. Die Sauerstoffanreicherung des Gebläsewindes erfordert also bei Einhaltung praktisch verwertbarer Schmelzleistungsgrenzen zwangsläufig eine Reduzierung der Gebläsewindmengen, d.h. bei einem mit Heißwind betriebenen Kupolofen eine Reduzierung der Heißwindmenge, und somit eine Reduzierung der Ofengasmenge. Die Reduzierung der Ofengasmenge führt zu einer Reduzierung der Gasgeschwindigkeiten im Ofen, wodurch der Anteil der Wärmeübertragung als Funktion der Gasmenge in der Schüttung sinkt und damit das Abschmelzen behindert wird. Weiter werden durch die Sauerstoffinjektion im Schüttungsbereich hohe Sauerstoffkonzentrationen geschaffen, die wegen der Grobstückigkeit des Kokses bei Überschreitung von Konzentrationsgrenzbereichen nicht vollständig mit Kohlenstoff umgesetzt werden können. Der nicht umgesetzte Sauerstoff reagiert mit Eisen zu FeO und führt zu Einschränkungen im Schmelzprozeß.

Der mit Heißwind betriebene Kupolofen, dessen Heißwind im Rekuperator erzeugt wird und der mit Rauchgas beaufschlagt ist, welches bei der Gichtgasverbrennung entsteht, ist die derzeitig verbreitetste Beißwindkupolofenausführung. Dieser Ofen ist auch für die Herstellung von Gußeisen bei Einsatz von hohen Anteilen an Stahlschrott geeignet. Bekannt ist es auch, daß im Heißwindkupolofen über das temperaturabhängige Boudouard-Gleichgewicht CO₂ + C --> CO thermodynamisch sowohl oxidierend als auch reduzierend auf die Einsatzstoffe wirkende Ofenbereiche entstehen. Eine Überhitzung des flüssigen Eisens hängt dabei vorwiegend von der Höhe der Füllkokssäule, d. h. von der Durchtropfzeit des geschmolzenen Eisens und vom realisierten Temperaturprofil in der Füllkokssäule ab. Um eine möglichst hohe Überhitzung der Gußeisenschmelze zu erreichen, werden in der Oxidationszone beim Koksumsatz maximale Gastemperaturen angestrebt. Dies wird in der Praxis dadurch realisiert, indem die Verbrennungsluft bis zu 600 °C vorgewärmt wird oder zusätzlich Sauerstoff eingeleitet wird. Es werden somit Gastemperaturen von 2000 bis 2200 °C erreicht. Höhere Temperaturen sind auf Grund der zunehmenden Dissoziationsneigung der Verbrennungsprodukte und der hohen Strömungsgeschwindigkeiten in der Überhitzungszone nicht erreichbar. Beim Schmelzen von niedriggekohltem Metallschrott hat der Heißwindkupolofen verfahrenstechnisch den Nachteil, daß im Düsenbereich eine stark oxidierende Ofenatmosphäre entsteht, die einen Siliziumabbrand bis zu 30 % bewirkt.

Ursache hierfür ist die heterogene Verbrennungsreaktion des Kokses. Nachteilig ist weiterhin die beim Schmelzen entstehende große spezifische Gichtgasmenge, welche wiederum einen hohen Anlagenaufwand für die Gaswirtschaft erfordert. Eine Sonderausführung des koksbeheizten Kupolofens ist durch US-A-2788964 bekannt. Dieser Kupolofen stellt einen Heißwind-Schachtofen zur Herstellung von Roheisen durch Reduktion von Eisenerzen dar, soll aber auch als Umschmelzofen für Roheisen und Eisen/Stahlschrott anwendbar sein. Charakteristisch ist, daß der Heißwind mit bis zu 1000 °C durch eine ringförmige Leitung geblasen und von dort über Stichleitungen in die Reduktionszone des Schachtes in Abwärtsrichtung durch Düsen eingebracht wird. Durch die Verbrennung bedingt, rieselt eine Mischung aus Erz und Anthrazit durch die Reduktionszone, welche mit groben Koks gefüllt ist. In der Reduktionszone wird das Erz reduziert, und es werden Temperaturen bis 1900 °C erreicht. Der Gasaustritt im Herdbereich unmittelbar oberhalb des Schmelzbades ermöglicht den Abzug eines Hauptstromes der Abgase, welcher zu einer Sonderkonstruktion einer Heißwinderzeugung geleitet wird und so den frischen Gebläsewind erhitzt. Die Temperatur der Abgase soll über 1600 °C betragen. Eine Reduzierung des CO-Gehaltes des Reduktionsgases soll in der Reduktionszone des Ofens dadurch erreicht werden, indem der Heißwind, welcher Sauerstoffträger ist, Kohlenmonoxid zu Kohlendioxid verbrennt. Der Schachtofen ist weiterhin mit einer Leitung und einem Lüfter versehen, durch die als Nebenströmung eine aufwärts gerichtete kohlenwasserstoffreiche (d.h. kohlenmonoxidarme) Gasströmung aus einem Abzug im oberen Schachtbereich abgezogen wird und über eine Ringleitung durch Düsen unterhalb der Düsen für die Zuführung des Heißwindes in die Verbrennungs- und Reduktionszone zurückgeführt wird. Durch die Zwangsströmung des Hauptteils der Ofengase, d.h. durch die sogenannte abwärts gerichtete Verbrennung, die auch als umgekehrte Feuerung bezeichnet wird, sollen in der Reduktionszone Temperaturen von 1800 °C bis 1900 °C erzeugbar sein, die damit die Reduktion von Eisenerz ermöglichen. Der Nachteil dieses Heißwindschachtofens besteht darin, daß die für die koks- und/oder kohlebeheizten Schachtschmelzöfen auschlaggebenden exothermen Prozesse ab den Heißwinddüsen abwärts verlagert werden und erst dort die für den Wärmeübergang auf den festen Einsatz notwendigen heißen Reaktionsgase entstehen. Damit steht mit der Umwandlung des für die Wärmeübertragung bewährten, effektiven Gegenstromprinzips in das ineffektive Gleichstromprinzip für den Wärmeübergang nur ein verkürzter Schachtteil zur Verfügung, was einer Reduzierung auf 1/4 der normalen Wärmeübergangszone entspricht, die bei US-A-2788964 nicht durch andere Maßnahmen kompensiert werden. Da die erreichten Ofenraumtemperaturen von 1800 °C bis 1900 °C dem üblichen Niveau von Kalt- bzw. Heißwindöfen entsprechen, ist das Schmelzen eines eisenmetallischen Einsatzes unter diesen Bedingungen nicht sicher möglich.

Der aufwärts gerichtete, oberhalb der Heißwinddüsen entstehende Nebenstrom besteht aus Kohlenwasserstoffen, die hauptsächlich über die Wassergasreaktion und die Methanreaktion gebildetes Methan sind. Die Bildungsbedingungen für Methan nach diesem Mechanismus setzen aber bei Normaldruck Temperaturen größer 700 °C und unter technischen Bedingungen vorzugsweise Temperaturen von 1000 °C und eine wasserdampfgesättigte Atmosphäre voraus. Der Ofen nach US-A-2788964 schließt aber gerade diese Bedingungen aus, so daß eine aufwärtsgerichtete Strömung von gasförmigen Kohlenwasserstoffen nicht entstehen kann und das Kreislaufgasprinzip damit nicht realisierbar ist.

Wärmetechnisch ist die Einspeisung von Kohlenwasserstoffen in eine Ebene unterhalb der Heißwinddüsen bedeutungslos, da diese Ebene zu weit von den Winddüsen entfernt angeordnet ist. Dadurch hat sich der Luft-Sauerstoff des Heißwindes bereits mit dem Kohlenstoff der Koks- und/oder Kohleschüttung umgesetzt und steht nicht mehr für die Methanverbrennung zur Verfügung. Methan wird somit an der unmittelbar darunterliegenden Abzugsöffnung ungenutzt ausgetragen. Sollten Teile der C-H-Verbindungen trotzdem zu CO₂ und H₂O verbrennen, werden diese Gaskomponenten gemeinsam mit dem aus der Verbrennung des Kokses und/oder der Kohle stammenden CO₂ entsprechend der Wirkung des Boudouard-Gleichgewichtes durch den Kohlenstoff des Kokses und/oder der Kohle unterhalb der Düsen zu CO und H₂ endotherm reduziert, wodurch als Effekt eine Absenkung der Temperatur in der Reduktionszone und ein Verbrauch des groben Kokses verbunden sind. Nachteilig ist weiterhin, daß bei dem Ofen nach US-A-2788964 wegen des unbeheizten Schachtes oberhalb der Heißwinddüsen, die insbesondere für den Hochofenprozeß wichtige exotherme und deshalb mit 55 % bis 60 % an der Gesamtreduktion dominierende indirekte Reduktion, welche auf der Ausbildung ausgedehnter Temperaturzonen zwischen 800 °c und 1000 °C beruht, unterdrückt wird. Oberhalb 1000 °C setzt die endotherme direkte Reduktion ein. Der in den Ofen eingebrachte Möller wird erst in der Düsenebene schlagartig auf Temperaturen größer 1000 °C aufgeheizt und sofort den Bedingungen der direkten Reduktion ausgesetzt. Der damit verbundene, wesentlich höhere Wärmebedarf kann mit dem beschriebenen üblichen Möller nicht mehr aufgebracht werden, wodurch der Wärmehaushalt des Ofens zusammenbricht und der Prozeß zum Erliegen kommen kann.

Ebenfalls nachteilig ist die geometrische Ausbildung der Ofenzone unterhalb der Gicht, die in der dargestellten kurzen, gedrängten Ausführung nicht die notwendigen Zeitreserven für die Aufheiz- und Diffusionsprozesse zur Verfügung stellen kann und, daß der grobkörnige Füllkoks vor den Winddüsen zu Prozeßbeginn verbraucht wird und nur durch kleinstückigen Möller und Koks und/oder Kohle ersetzt wird. Damit wird die prozeßnotwendige Durchgasung, Aufheizung und Diffusion granulometrisch zusätzlich behindert. Der Hochofenprozeß nach dem Verfahren gemäß US-A-2788964 ist ebenso wie die Anwendung des dargestellten Kreislaufgasverfahrens und das Schmelzen des metallischen Einsatzes aus wärmetechnischen, geometrischen und strömungstechnischen Gründen praktisch nicht möglich.

Alle derzeit bekannten Neuentwicklungen haben ebenfalls Nachteile beim Schmelzen von niedriggekohlten, oxidationsanfälligen eisenmetallischen Werkstoffen. Bei dem von der Firma TUPI in Brasilien entwickelten Ofen werden die eisenmetallischen Einsatzstoffe in einen Zentralschacht chargiert.

Der Koks und Kalk werden über sechs um den Umfang symmetrisch angeordnete Füllschächte einem Gestell zugeführt. Die Verbrennungsluft, welche durch Spezialdüsen mit hoher Geschwindigkeit eingeblasen wird, wird nicht vorgewärmt. Die Verbrennungsluft wird aber mit bis zu 1,5 % Sauerstoff angereichert. Der Ofen ist so gesteuert, daß die Verbrennungsgase immer durch den Zentralschacht strömen und somit die eisenmetallischen Einsatzstoffe gut aufheizen. Durch eine Sekundärdüsenreihe werden die CO-haltigen Gase vor Eintritt in den Zentralschacht nachverbrannt. Die Nachteile des Ofens sind darin zu sehen, daß sich durch die Schüttung eine Vielzahl von gasdurchströmten Kanälen bildet, die nicht gleichmäßig mit heißer Verbrennungsluft versorgt werden können, wodurch dann keine vollständige Vermischung von Verbrennungsluft und -gas eintritt und somit auch keine vollständige Umsetzung des CO in CO₂ erfolgt. Das Abgas hat noch einen CO-Gehalt von > 0,1 Vol.-%. Demgemäß ist zur Vermeidung von Umweltbelastungen auch hier ein relativ hoher Aufwand für die Gaswirtschaft erforderlich. Beim Heißwindkupolofen mit Plasmabrenner wird wegen des hohen CO-Anteiles und der erforderlichen Nachverbrennung die Verbrennungsluft zusätzlich herkömmlich vorgewärmt. Der Plasmabrenner wird anschließend zur Erhitzung eines Teilstromes der Verbrennungsluft auf Temperaturen von 3000 bis 5000 °C eingesetzt, womit jede beliebige Mischtemperatur eingestellt werden kann. Die Eingangstemperatur der Verbrennungsluft kann bis zu 1400 °C betragen. Diese hohen Temperaturen bedingen eine reduzierende Fahrweise des Ofens. Die Nachteile des Heißwindkupolofens mit Plasmabrenner sind in den relativ hohen Stromkosten zu sehen, da hier indirekt elektrisch geschmolzen wird. Der CO₂-Ausstoß ist groß.

Zur Vermeidung des großen Gasausstoßes sind für diesen Ofentyp Modellvorstellungen als Zukunftsidee entwickelt worden (Sonderdruck Gießerei 79 (1992) 4, S. 134-143). Es soll ein geschlossener Gaskreislauf gebildet werden, indem ein hocherhitztes Gas als Wärmeträger, z. B. über Plasmabrenner im Teilstrom, erzeugt wird, dann durch Vermischen mit dem Restgas auf die gewünschte Temperatur gebracht wird, das Gichtgas vollständig abgesaugt wird und nach seiner Reinigung dem Plasmabrenner wieder zur Erhitzung zugeführt wird. Nachteilig ist, daß zur Realisierung dieser Modellvorstellung ein hoher Anlagenaufwand, verbunden mit einem großen Platzbedarf, notwendig ist, und der Schmelzprozeß, bedingt durch die Herstellung einer künstlichen Ofengaszusammensetzung, nur durch zusätzliche Meß-, Steuer- und Regelungstechnik sicher geführt werden kann.

Die Aufgabe der Erfindung besteht in der Entwicklung eines einfach funktionierenden koksbeheizten Kupolofens mit Kreislaufgasführung und eines durch niedrige Schmelzkosten gekennzeichneten und den Siliziumabbrand vermeidenden Verfahrens zum sicheren Schmelzen von eisenmetallischen Werkstoffen, insbesondere von niedriggekohlten, oxidationsanfälligen eisenmetallischen Einsatzstoffen, wie Stahlschrott, zur Herstellung von Gußeisen, welche eine geringe und CO-freie Gichtgasmenge entstehen lassen und somit die Umweltbelastungen stark reduzieren. Verfahrensgemäß wird die Aufgabe gelöst, indem das Ofengas mit einer Temperatur > 400 °C in der Vorwärmzone teilweise abgezogen wird und in der Schmelz- und Überhitzungszone zusammen mit > 23 %, vorzugsweise mit 33 bis 48 % Sauerstoff, bezogen auf die zugeführte Gasmenge, wieder zugeführt wird. Ein weiteres Merkmal des Verfahrens besteht darin, daß die teilweise abgezogene Ofengasmenge bis zu 70 % der beim Schmelzprozeß entstehenden Ofengase beträgt. Vorteilhafterweise reduziert sich das Abgasvolumen, weil das bei den windbetriebenen Kupolöfen vorhandene Ballastgas Stickstoff des Windes durch das energetisch nutzbare Ofengas (als Kreislaufgas) ersetzt und sinnvoll im Schmelzprozeß verwertet wird. Das Ofengas wirkt hier als gasförmiger Brennstoff, verbrennt mit dem zugeführten Sauerstoff, und damit werden die reduzierenden Bedingungen im Ofen verstärkt. Der gerätetechnische Aufwand für die Gaswirtschaft ist gering.

Der erfindungsgemäße koksgefeuerte Kupolofen gemäß den kennzeichnenden Merkmalen der Ansprüche 1 bis 7 wird ausschließlich mit Sauerstoff als Verbrennungsmittel und Fördermedium für das unterhalb der Begichtung abgezogene, nicht nachverbrannte CO-reiche Ofengas benutzt. Damit wird die beim klassischen Kupolofen außerhalb der Schüttung realisierte Nachverbrennung zu CO-freiem Abgas, die Voraussetzung für die Heißwinderzeugung aus Frischluft (ca. 21 % O₂, 79 % N₂) über Wärmetauscher aus dem heißen Ofengas ist, bei dem erfindungsgemäßen Kupolofen in die Schüttung unmittelbar vor die Oxidationszone vorverlegt. Somit beruhen die beschriebenen und praktisch bestätigten Wirkungen des Ofens darauf, daß grundsätzlich ohne den Stickstoffträger Luft, ausschließlich mit Sauerstoff als Verbrennungsmittel gearbeitet wird. Vorteilhafterweise erfolgt die Nutzung des Energiegehaltes der CO-haltigen Ofengase direkt ohne den Umweg der Heißwinderzeugung in der Schmelz- und Überhitzungszone. Nur dadurch ist die prozeßtypische Verschiebung des Boudouard-Gleichgewichtes nach CO erreichbar.

Durch die erfindungsgemäße Gestaltung des Düsenbereiches im Ofenmantel wird erreicht, daß sich bereits an der Düsenmündung das Ofengas mit Sauerstoff vermischt und eine Umsetzung von CO + O₂ in CO₂ einsetzt. Dies führt zur gewünschten Ofenatmosphäre und zu den metallurgischen Wirkungen. Die Erfindung soll am Beispiel des Schmelzens von zwei Graugußlegierungen näher erläutert werden. Hierzu zeigen die zugehörigen Zeichnungen in
- Figur 1:: einen erfindungsgemäßen Kupolofen im Schnitt
- Figur 2:: eine weitere Ausführung des koksbeheizten Kupolofens im Schnitt
- Figur 3:: die erfindungsgemäße Gestaltung des Düsenbereiches im Ofenmantel im Schnitt

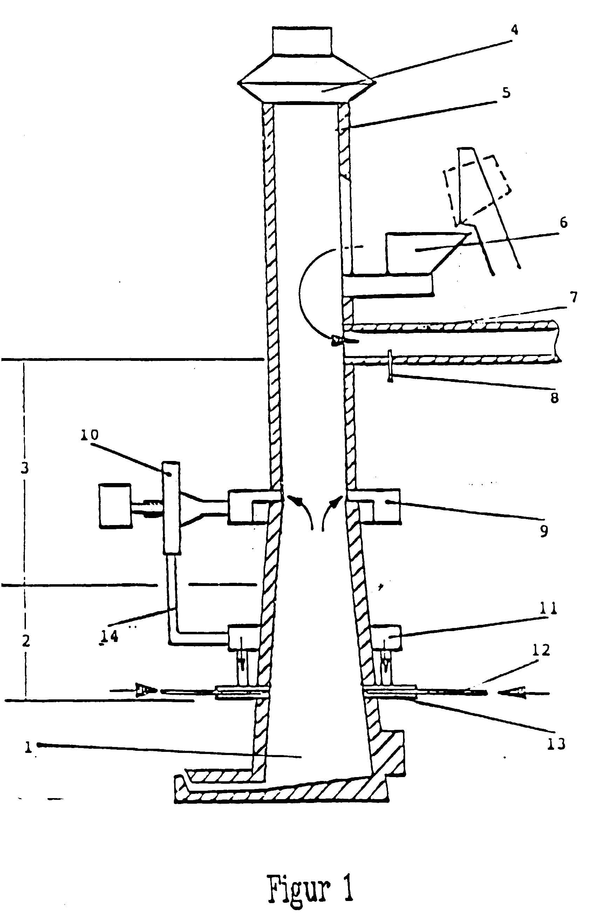

In Figur 1 ist ein koksbeheizter Kupolofen mit Abgasschlot 4 im Schnitt dargestellt. Sie zeigt, daß unterhalb der Beschickungseinrichtung 6 und der Untergichtabsaugung 7 im Bereich der Vorwärmzone 3 ein Ofengasabsaugring 9 und oberhalb des Herdes 1 im Bereich der Schmelz- und Überhitzungszone 2 vier Düsen 13, die zentrisch geführte Sauerstofflanzen 12 haben, angeordnet sind, wobei der Ofengasabsaugring 9 durch einen Radialventilator 10, einen Kreislaufgaskanal 14 und einen Kreislaufgasring 11 mit den Düsen 13 verbunden ist.

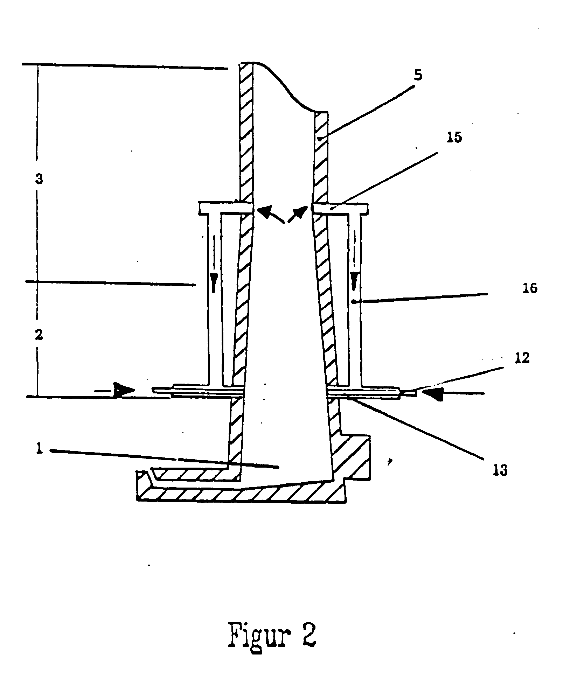

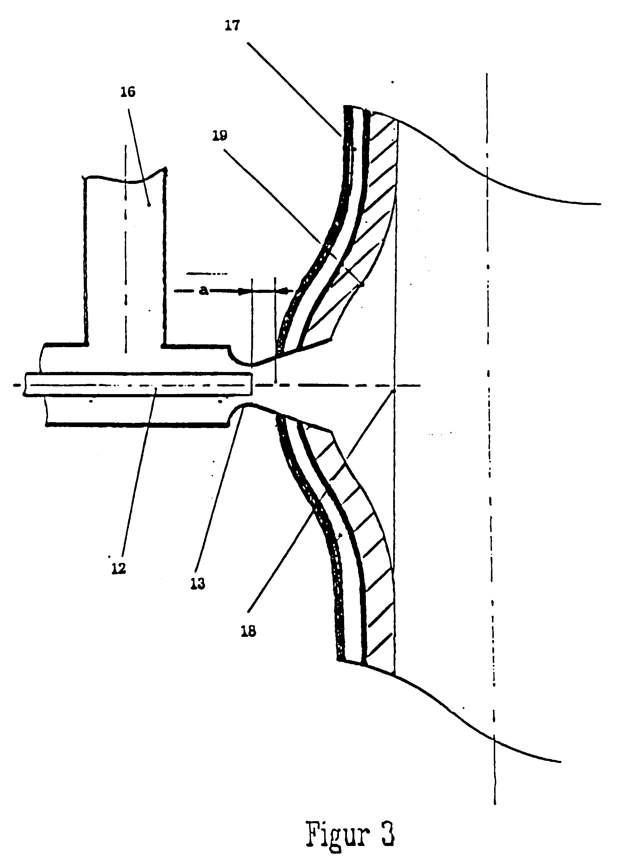

Figur 2 zeigt eine weitere Ausführung des koksbeheizten Kupolofens im Schnitt. Kennzeichnend ist, daß hier unterhalb der Beschickungseinrichtung 6 und der Untergichtabsaugung 7 vier Ofengasabsaugöffnungen 15 um den Umfang des Ofenschachtes 5 angeordnet sind, die durch Kanäle 16 mit den über dem Herd 1 liegenden Düsen 13, die ebenfalls zentrisch geführte Sauerstofflanzen 12 haben, verbunden sind. Figur 3 zeigt die erfindungsgemäße Gestaltung des Düsenbereiches im Ofenmantel im Schnitt. Der Ofenmantel 17 hat im Bereich der Düsenwirkungsrichtung 18 eine kalottenartige Erweiterung 19 und die in den Düsen 13 zentrisch geführten Sauerstofflanzen 12 haben einen Abstand a von 18 mm zum Ofenmantel 17. Eine derartige Anordnung von Düse und Sauerstofflanze wirkt als saugender Injektor, wie z. B. ein Gasstrahlverdichter. Zum erfindungsgemäßen Schmelzen von Graugußlegierungen ist, wie nachstehend beschrieben, zu verfahren.

### Beispiel 1

Über die Beschickungseinrichtung 6 wird der koksbeheizte Kupolofen mit eisenmetallischem Einsatzmaterial, bestehend aus 50 % Gußbruch und 50 % Kreislaufmaterial, mit Satzkoks und Schlackebildnern beschickt. Satzkoks ist der Anteil am Brennstoff, der als Ersatz des Anteils Brennstoff Füllkoks während des Schmelz- und Überhitzungsprozesses dem Kupolofen zugegeben wird. Füllkoks ist der Anteil am Brennstoff, welcher vor Beginn des Schmelzens und Überhitzens in den Kupolofen zum Aufbau einer Kokssäule eingebracht wird. Diese Kokssäule bildet die Schmelz- und Überhitzungszone sowie den Bereich der Aufkohlung des geschmolzenen eisenmetallischen Einsatzmaterials. Schlackebildner sind mineralische Komponenten, die zur Verschlackung der bei der Verbrennung von Koks entstehenden Koksasche benötigt werden. Die Zugabemenge an Schlackebildnern ist in Prozent zur zugegebenen Satzkoksmenge in kg/Satz angegeben. Die Satzkoksmenge ist in Prozent zum Gewicht des eisenmetallischen Einsatzmateriales angegeben. Der Füllkoks ist in Prozent zum Gewicht des eisenmetallischen Einsatzes während einer Schmelzreise, d. h. unter Berücksichtigung der Anzahl der erschmolzenen eisenmetallischen Einsatzmaterialmenge über die gesamte Schmelzzeit, angegeben. Die Gattierungsanalyse ergibt sich zu 3,42 % C, 1,85 % Si, 0,62 % Mn, 0,50 % P und 0,11 % S und < 1 % Spurenelemente sowie bis 100 % Fe. Der Eisenoxidanhang des Einsatzmaterials beträgt 2 %. Pro Satz werden 10,43 % Satzkoks Stückgröße 60/90 zugegeben. Der anteilmäßige Füllkoks, Stückgröße 80/100, ergibt sich zu 1,81 %, und als Schlackebildner werden 20 % Kalkstein vom Satzkoks eingesetzt. Durch den Radialventilator 10 werden vom Ofengasabsaugring 9 den Düsen 13 60 % des Ofengases, welches sich aus etwa 63 % CO und 37 % CO₂ sowie aus Restgas (H₂ und H₂O) zusammensetzt, dem Ofen wieder zugeführt. Dieses Ofengas hat eine Temperatur von 550 °C und verbrennt durch die gleichzeitige Zuführung von 33 % Sauerstoff, bezogen auf die zugeführte Gasmenge. Die dadurch im Schmelz- und Überhitzungsschacht reduzierend wirkenden metallurgischen Vorgänge ergeben eine Flüssigeisenanalyse von 3,64 % C, 2,03 % Si, 0,58 % Mn, 0,5 % P und > 0,11 % S. Die Aufkohlungsrate dieser stahlschrottfreien Gattierung ergibt sich somit zu 7 % relativ, die Aufsilizierung zu 10 % relativ und der Manganabbrand zu etwa 5 % relativ. Zur Aufkohlung werden 0,27 % des Satzkokses und zur Reduzierung des zweiprozentigen Eisenoxidanteiles 0,23 % des Satzkokses benötigt. Der effektive Schmelzkoksanteil beträgt 11,75 %. Durch die basische Ofenführung wird eine sukzessive Aufschwefelung des Gußeisens vermieden. Die Erfindung bewirkt eine Minimierung des Staubausstoßes auf ungefähr 40 % üblicher Staubauswürfe beim koksbeheizten Kupolofen. Von der Untergichtabsaugung 7 werden die restlichen Ofengase abgezogen, wobei die Zündeinrichtung 8 ein ständiges Zünden des Gichtgases und damit ein vollständiges Nachverbrennen gewährleistet. Demgemäß sind die nachgeschalteten Entstaubungseinrichtungen kleiner.

### Beispiel 2

Über die Beschickungseinrichtung 6 wird der koksbeheizte Kupolofen mit 25 % Gußspäne, 40 % Stahlschrott, darunter 30 % Schredderschrott, 32 % Kreislaufmaterial, 0,22 % FeSi-Formlinge und 0,22 % FeMn-Formlinge beschickt. Die Gattierungsanalyse ergibt sich zu 2,09 % C, 1,18 % Si, 0,55 % Mn, 0,34 % P und 0,08 % S und < 1 % Spurenelemente sowie bis 100 % Fe. Der Eisenoxidanhang des Einsatzmaterials beträgt 2 %. Pro Satz werden 10,43 % Satzkoks, Stückgröße 60/90, zugegeben. Der anteilmäßige Füllkoks, Stückgröße 80/100, ergibt sich zu 1,81 %. Als Schlackebildner werden 20 % Kalkstein vom Satzkoksanteil eingesetzt. Von der Ofengasabsaugung 9 werden 60 % des Ofengases mit einer Temperatur von 480 °C durch die Düsen 13 der Schmelz- und Überhitzungszone 2 wieder zugeführt, wobei dieses durch die gleichzeitige Zuführung von 33 % Sauerstoff, bezogen auf die zugeführte Gasmenge, verbrennt. Damit ergibt dies eine Flüssigeisenanalyse von 3,55 % C, 1,4 % Si, 0,6 % Mn, 0,40 % P und > 0,10 % S. Die Aufkohlungsrate dieser aus nur schwerschmelzenden Recyclingmaterialien bestehenden Gattierung ergibt sich zu 71 % relativ. Der relative Si-Zubrand liegt bei etwa 10 % und der relative Mn-Abbrand bei ungefähr 5 %. Die Schwefelaufnahme resultiert zu 33 % aus dem Schwefel des Kokses bei saurer Ofenfahrweise. Zur Aufkohlung werden 1,67 % des Satzkokses und zur Reduzierung des Eisenoxidanteiles 0,23 % des Satzkokses verbraucht. Der effektive Schmelzkoksanteil ergibt sich zu 10,34 %. Die Rinneneisentemperatur beträgt 1500 °C. Durch das Abziehen von 60 % Ofengas unterhalb der Gicht aus der Schüttsäule und einer Verbrennung mit Sauerstoff im Herdbereich des Ofens ergibt sich eine Minimierung des Staubausstoßes auf etwa 40 % des üblicherweise beim Kupolofenschmelzprozeß existierenden Staubauswurfes. Die restlichen nicht abgezogenen Ofengase werden vollständig nachverbrannt.

### Bezugszeichenliste

- 01: Herd
- 02: Schmelz- und Überhitzungszone
- 03: Vorwärmzone
- 04: Abgasschlot
- 05: Ofenschacht
- 06: Beschickungseinrichtung
- 07: Untergichtabsaugung
- 08: Zündeinrichtung
- 09: Ofengasabsaugring
- 10: Radialventilator
- 11: Kreislaufgasring
- 12: Sauerstofflanzen
- 13: Düsen
- 14: Kreislaufgaskanal
- 15: Ofengasabsaugöffnung
- 16: Kanäle
- 17: Ofenmantel
- 18: Düsenwirkungsrichtung
- 19: kalottenartige Erweiterung

## Patentansprüche

1. Koksbeheizter Kupolofen mit Kreislaufgasführung zum Schmelzen von eisenmetallischen Werkstoffen, insbesondere von niedriggekohlten, oxidationsanfälligen eisenmetallischen Einsatzstoffen, wie beispielsweise Stahlschrott zur Herstellung von Gußeisen, **dadurch gekennzeichnet**, daß unterhalb der Beschickungseinrichtung (6) und der Untergichtabsaugung (7) ein Ofengasabsaugring (9) und oberhalb des Herdes (1) ein oder mehrere Düsen (13), die zentrisch geführte Sauerstofflanzen (12) haben, angeordnet sind, wobei der Ofengasabsaugring (9) durch eine Absaugeinrichtung (10), einen Kreislaufgaskanal (14) und einen Kreislaufgasring (11) mit den Düsen (13) verbunden ist.

2. Koksbeheizter Kupolofen nach Anspruch 1, **dadurch gekennzeichnet**, daß die Absaugeinrichtung (10) ein Lüfter, beispielsweise ein Radialventilator, ist.

3. Koksbeheizter Kupolofen nach den Ansprüchen 1 und 2, **dadurch gekennzeichnet**, daß unterhalb der Beschickungseinrichtung (6) und der Untergichtabsaugung (7) mehrere Ofengasabsaugöffnungen (15) um den Umfang des Ofenschachtes (5) angeordnet sind, die durch Kanäle (16) mit den über den Herd (1) liegenden Düsen (13), die zentrisch geführte Sauerstofflanzen (12) haben, verbunden sind.

4. Koksbeheizter Kupolofen nach den Ansprüchen 1 bis 3, **dadurch gekennzeichnet**, daß der Ofenmantel (17) im Bereich der Düsenwirkungsrichtung (18) eine kalottenartige Erweiterung (19) hat.

5. Koksbeheizter Kupolofen nach den Ansprüchen 1 bis 4, **dadurch gekennzeichnet**, daß die in den Düsen (13) zentrisch geführten Sauerstofflanzen (12) zum Ofenmantel (17) im Abstand a angeordnet sind.

6. Koksbeheizter Kupolofen nach Anspruch 5, **dadurch gekennzeichnet**, daß der Abstand a regelbar, jedoch mindestens 15 mm, ist.

7. Koksbeheizter Kupolofen nach den Ansprüchen 3 und 4, **dadurch gekennzeichnet**, daß die Absaugvorrichtung ein saugender Injektor, beispielsweise ein Gasstrahlverdichter, ist.

8. Verfahren zum Schmelzen von eisenmetallischen Werkstoffen in einem koksbeheizten Kupolofen mit Kreislaufgasführung nach den Ansprüchen 1 bis 7, **dadurch gekennzeichnet**, daß bis zu 70 % des beim Schmelzprozeß entstehenden Ofengases mit einer Temperatur von > 400 °C in der Vorwärmzone teilweise abgezogen wird und in der Schmelz- und Überhitzungszone zusammen mit > 23 % Sauerstoff, bezogen auf die zugeführte Gasmenge, wieder zugeführt wird.

9. Verfahren zum Schmelzen nach Anspruch 8, **dadurch gekennzeichnet**, daß 33 bis 48 % Sauerstoff, bezogen auf die zugeführte Gasmenge, zugeführt wird.

## Claims

1. Coke-fired cupola furnace with circulating-gas guidance for melting iron metallic materials, in particular low-carbon iron metallic charge materials which are susceptible to oxidation, such as for example steel scrap for producing cast iron, characterized in that a furnace-gas suction ring (9) is arranged below the charging device (6) and the lower-throat suction arrangement (7) and one or more nozzles (13), which have centrally guided oxygen lances (12), are arranged above the hearth (1), the furnace-gas suction ring (9) being connected to the nozzles (13) by a suction device (10), a circulating-gas duct (14) and a circulating-gas ring (11).

2. Coke-fired cupola furnace according to Claim 1, characterized in that the suction device (10) is a fan, for example a centrifugal ventilator.

3. Coke-fired cupola furnace according to Claims 1 and 2, characterized in that a plurality of furnace-gas suction orifices (15) are arranged, below the charging device (6) and the lower-throat suction arrangement (7), around the circumference of the furnace shaft (5), which orifices are connected by ducts (16) to the nozzles (13) which are situated above the hearth (1) and have centrally guided oxygen lances (12).

4. Coke-fired cupola furnace according to Claims 1 to 3, characterized in that the furnace casing (17) has a dome-shaped widening (19) in the region of the direction of action (18) of the nozzles.

5. Coke-fired cupola furnace according to Claims 1 to 4, characterized in that the oxygen lances (12) which are centrally guided in the nozzles (13) are arranged at a distance a from the furnace casing (17).

6. Coke-fired cupola furnace according to Claim 5, characterized in that the distance a is adjustable, but is at least 15 mm.

7. Coke-fired cupola furnace according to Claims 3 and 4, characterized in that the suction device is a sucking injector, for example a gas-jet compressor.

8. Method of melting iron metallic materials in a coke-fired cupola furnace with circulating-gas guidance according to Claims 1 to 7, characterized in that up to 70% of the furnace gas formed during the melting process at a temperature of > 400°C is partially drawn off in the preheating zone and is fed back in again in the melting and superheating zone, together with > 23% of oxygen, based on the amount of gas supplied.

9. Method of melting according to Claim 8, characterized in that 33 to 48% of oxygen, based on the amount of gas supplied, is supplied.

## Revendications

1. Cubilot chauffé au coke à guidage de circulation des gaz pour la fusion de matériaux sidérurgiques, en particulier de matériaux de cémentation sidérurgiques faiblement carburés, susceptibles d'oxydation, comme par exemple des riblons d'acier, pour la fabrication de fonte de moulage, caractérisé en ce que, en-dessous du dispositif de chargement (6) et de l'aspiration de fournée inférieure (7) sont disposés un anneau d'aspiration des gaz de four (9) et, au-dessus du creuset (1), une ou plusieurs buses (13) qui ont des lances à oxygène (12) guidées centralement, l'anneau d'aspiration des gaz de four (9) étant relié aux buses (13), par un dispositif d'aspiration (10), un canal de gaz de circulation (14) et un anneau de gaz circulation (11).

2. Cubilot chauffé au coke selon la revendication 1,
caractérisé en ce que le dispositif d'aspiration (10) est un ventilateur, par exemple un ventilateur radial.

3. Cubilot chauffé au coke selon les revendications 1 et 2,
caractérisé en ce que, en-dessous du dispositif de chargement (6) et de l'aspiration de fournée inférieure (7), sont disposées plusieurs ouvertures d'aspiration de gaz de four (15), autour de la périphérie du puits de four (5), qui sont reliées, par des canaux (16) aux buses (13) se trouvant au-dessus du creuset (1), qui ont des lances à oxygène (12) guidées centralement.

4. Cubilot chauffé au coke selon les revendications 1 à 3,
caractérisé en ce que la paroi du four (17) a, dans la direction d'action (18) des buses, un élargissement (19) en forme de calotte.

5. Cubilot chauffé au coke selon les revendications 1 à 4,
caractérisé en ce que les lances à oxygène (12) guidées centralement dans les buses (13) sont disposées à un écartement a par rapport à la paroi du four (17).

6. Cubilot chauffé au coke selon la revendication 5,
caractérisé en ce que la distance a est réglable, mais est d'au moins 15 mm.

7. Cubilot chauffé au coke selon les revendications 3 et 4,
caractérisé en ce que le dispositif d'aspiration est un injecteur aspirant, par exemple un compresseur à flux de gaz.

8. Procédé pour la fusion de matériaux sidérurgiques dans un cubilot chauffé au coke à guidage de circulation des gaz selon les revendications 1 à 7,
caractérisé en ce que le gaz de four produit pendant le processus de fusion, à une température supérieure à 400°C, est partiellement prélevé jusqu'à 70% dans la zone de préchauffage et est ramené dans la zone de fusion et de surchauffage en même temps que plus de 23% d'oxygène, rapportés à la quantité de gaz amenée.

9. Procédé pour la fusion selon la revendication 8,
caractérisé en ce que 33 à 48 % d'oxygène, rapportés à la quantité de gaz amenée, sont amenés.
